Europäisches Patentamt

European Patent Office

Office européen des brevets

(19)

(11) EP 0 814 608 A1

(12) EUROPEAN PATENT APPLICATION

(43) Date of publication:
29.12.1997 Bulletin 1997/52

(51) Int Cl.$^6$: H04N 5/44

(21) Application number: 97401381.5

(22) Date of filing: 17.06.1997

(84) Designated Contracting States:
AT BE CH DE DK ES FI FR GB GR IE IT LI LU MC NL PT SE

(30) Priority: 19.06.1996 FR 9607629

(71) Applicant: THOMSON Multimedia
92648 Boulogne Cédex (FR)

(72) Inventors:
• Magione, José
  92648 Boulogne Cedex (FR)

• Pauthion, Jacques
  92648 Boulogne Cedex (FR)
• Maetz, Pascal
  92648 Boulogne Cedex (FR)

(74) Representative: Ruellan-Lemonnier, Brigitte et al
THOMSON multimedia,
46 quai A. Le Gallo
92648 Boulogne Cédex (FR)

(54) **Method and device for modifying the field frequency of a television signal**

(57)     The present invention concerns a method and a device for generating television images having a raster frequency $F_2$ from source images having a raster frequency $F_1$ different from $F_2$.

According to the invention, on the one hand the signals $H_{sync}$ and $V_{sync}$ and on the other hand the number of lines constituting each received raster and the number of pixels constituting these lines, are used to generate line synchronisation signals $H_{2sync}$ having a frequency $f_2$ different from $f_1$, and raster synchronisation signals $V_{2sync}$ having the frequency F2.

The invention concerns notably a method and a device for generating television images at 100 Hz (or 120 Hz) standard from images at 50 Hz (or respectively 60 Hz) standard.

FIG.3

**Description**

The present invention concerns a method for generating television images having a field or raster frequency $F_2$ from source images having a raster frequency $F_1$ different from $F_2$.

The invention also concerns a device for implementing this method, having an acquisition unit intended to receive line synchronisation signals $H_{sync}$ and raster synchronisation signals $V_{sync}$ constituting the source images, a deflection unit intended to supply line synchronisation signals $H_{2sync}$ and raster synchronisation signals $V_{2sync}$ constituting the generated images, and at least one means for storing the useful lines representing the luminance and chrominance of the source images.

The invention concerns notably a method and a device for generating television images at 100 Hz (or 120 Hz) standard from images at 50 Hz (or respectively 60 Hz) standard.

The generation of images at 100 Hz standard from images at 50 Hz standard aims to attenuate the flicker effect of the image, both horizontal and vertical, by an AABB or ABAB processing, and consists of transforming an original 625/50/1:2 type scanning into a 625/100/1:2 type scanning. Thus, for a number of identical interlaced lines (625 or 525), the raster scanning frequency is doubled, which implies a multiplication by two of the line scanning frequency.

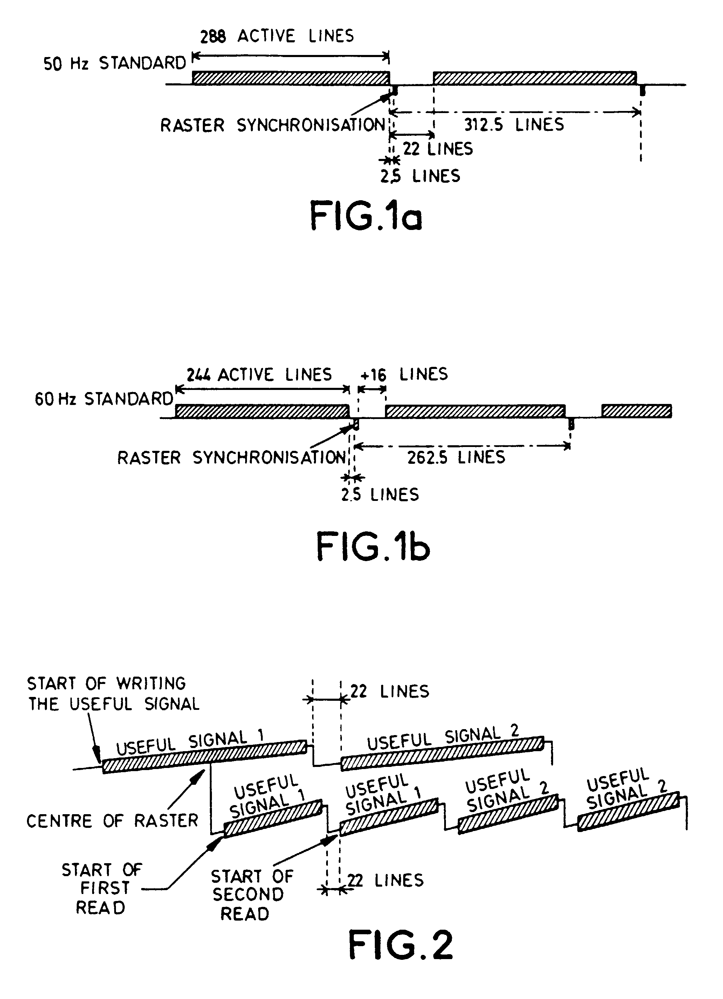

As shown schematically in Figure 1a, according to the current standard relating to TV signals, at 50 Hz standard, a television image is composed of two interlaced rasters of 312.5 lines, each having a duration of 64 μs. Each raster starts with 22 raster blanking lines followed by 288 active lines, followed by 2.5 pre-equalisation lines. At 60 Hz standard, as shown schematically in Figure 1b, the image is composed of two interlaced rasters of 262.5 lines, each having a duration of 64 μs. Each raster starts with 16 blanking lines followed by 244 active lines, followed by 2.5 pre-equalisation lines.

In practice, the standards defined above are more or less complied with. On the one hand, certain parameters, such as for example the number of lines, may change from one image raster to another and, on the other hand, the raster synchronisation signals are connected with the video equipment producing them (standard TV transmission, satellite TV transmission, games console, video recorders, video CD, etc). Even if these items of equipment comply with a given standard, the raster and line fly-back synchronisation signals, which should be periodic for a given mode of operation, are not generally so from one item of equipment to another, or for different modes of operation of the same item of equipment. Furthermore, these signals may be absent or too close together from one raster to another, the result of which is to cause synchronisation errors of the lines constituting the images generated from source images.

The aim of the invention is to implement a method and a device making it possible to obtain, from images delivered by various sources, images formed from rasters in which the number of lines is identical to the number of lines in the rasters constituting the source images.

According to the method of the invention, from the rasters constituting the source images, the useful lines representing luminance information and chrominance information are extracted, as well as the synchronisation signals $H_{sync}$ and $V_{sync}$ respectively of the lines and rasters of the said source images, the information extracted at a frequency $f_1$ is stored, the number of lines constituting each raster is counted, the number of pixels constituting these lines is counted, this pixel number is stored, on the one hand the signals $H_{sync}$ and $V_{sync}$ and on the other hand the number of lines constituting each received raster and the number of pixels constituting these lines, are used to generate line synchronisation signals $H_{2sync}$ at a frequency $f_2$ different from $f_1$, and raster synchronisation signals $V_{2sync}$ at the frequency $f_2$.

By virtue of the method according to the invention, a general mechanism is implemented for modifying received image raster frequencies capable of automatically adapting in the event of variations in the number of lines in two successive rasters or in the event of a variation in the number of pixels in a line of the said received rasters.

According to an important characteristic of the device of the invention, the acquisition unit has means for slaving the synchronisation of the rasters constituting the images to be generated to the number of useful lines in the rasters constituting the source images.

Other characteristics and advantages of the invention will emerge from the following description, given by way of a non-limitative example, with reference to the accompanying figures in which:

Figures 1a and 1b depict schematically the useful signal of a received image respectively according to the 50 Hz standard and according to the 60 Hz standard;

Figure 2 illustrates schematically a conventional method for generating images having a raster frequency of 100 Hz from source images having a raster frequency of 50 Hz;

Figure 3 depicts a block diagram of a device for generating images at 100 Hz standard according to the invention;

Figure 4 depicts a block diagram of an acquisition unit integrated with the device according to the invention;

Figure 5 depicts schematically a block diagram of a deflection unit integrated with the device according to the invention;

Figure 6 depicts a timing diagram illustrating a case of transition from an even raster to an odd raster of a received image;

Figure 7 depicts a timing diagram illustrating a case of transition from an odd raster to an even raster of the received image;

Figure 8 depicts a timing diagram illustrating the generation of synchronisation signals of 100 Hz image rasters produced by the device of Figure 3;

Figures 9 and 10 depict a timing diagram example illustrating the slaving of the deflection unit by the acquisition unit depicted in Figure 3.

The following definitions are used in the remainder of this description in order to facilitate its understanding:

- Video line: the set of pixels resulting from sampling of the video signal limited timewise by two successive front edges of the line fly-back. The duration of each line is 64 $\mu$s, the 50 Hz or 60 Hz video signal is sampled at 13.5 MHz, the result of this being that each line will be composed of 864 pixels.

- Useful signal: that part of the video signal representing the luminance and chrominance of an image.

- Useful line: any video line which includes a useful signal.

The aim of the method according to the invention is to generate images having a raster frequency $F_2$ from source images having a raster frequency $F_1$.

To this end, from the source image rasters, the useful lines representing luminance information and chrominance information are extracted, as well as the synchronisation signals $H_{sync}$ and $V_{sync}$ respectively of the lines and rasters of the said source images, the information extracted at a frequency $f_1$ is stored, the number of lines constituting each raster is counted, the number of pixels constituting these lines is counted, this pixel number is stored, on the one hand the signals $H_{sync}$ and $V_{sync}$ and on the other hand the number of lines constituting each received raster and the number of pixels constituting these lines, are used to generate line synchronisation signals $H_{2sync}$ at a frequency $f_2$ different from $f_1$, and raster synchronisation signals $V_{2sync}$, at the frequency F2.

In the case of the example relating to changing from the 50 Hz standard to the 100 Hz standard, the value of the frequency $f_2$ is double that of the frequency $f_1$. The latter is equal to 13.5 MHz.

According to an important characteristic of the method of the invention, for a received raster, of rank i, having a number of lines $LC_i$, two rasters are generated having respectively a number of lines $lc_i$ and a number of lines $lc'_i$ so as to fulfil the following conditions:

$$lc_i + lc'_i = 2*LC_i$$

and

$$lc_i = lc'_i = LC_i.$$

The method according to the invention is implemented by a device having an acquisition unit 2 intended to receive the line synchronisation signals $H_{sync}$ and the raster synchronisation signals $V_{sync}$ of the source images, a deflection unit 4 intended to supply line synchronisation signals $H_{2sync}$ and raster synchronisation signals $V_{2sync}$ of the generated images, and at least one means (6, 8) for storing the useful lines representing the source image luminance and chrominance.

According to an important characteristic of this device, the acquisition unit 2 has means (6, 8) for slaving the synchronisation of the rasters constituting the generated images to the number of useful lines in the rasters constituting the source images.

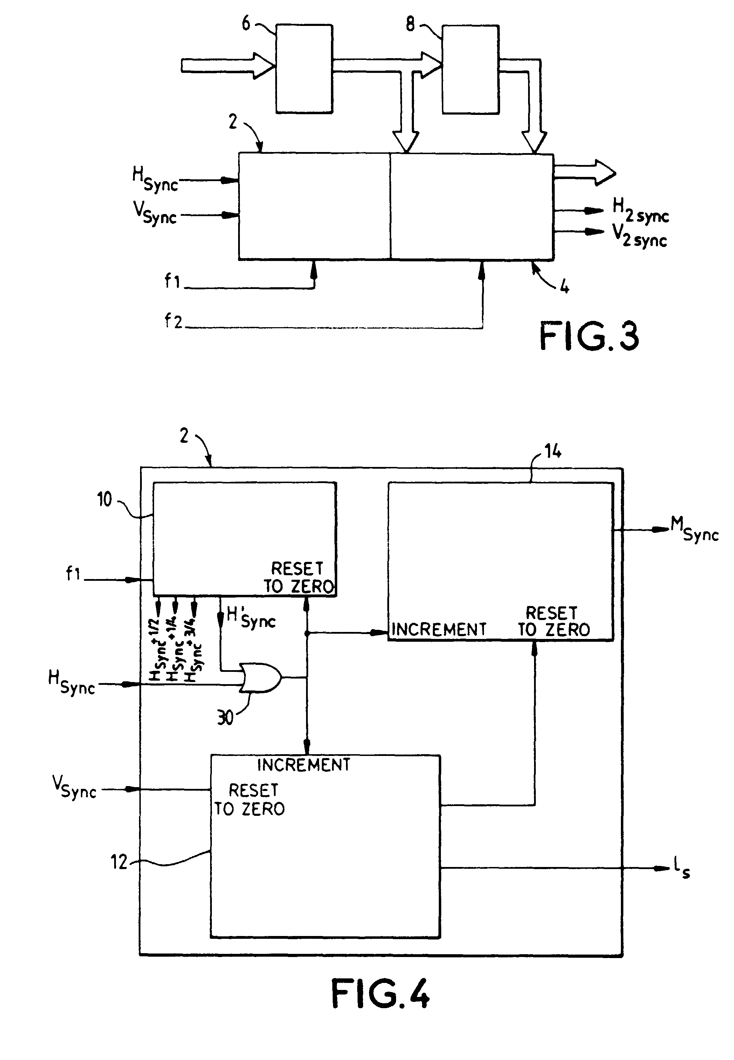

As can be seen in Figure 4, these synchronisation slaving means are constituted by a first counting means 10, synchronised to the first clock frequency $f_1$, and intended on the one hand to count the number $p_r$ of pixels constituting one line of a received raster and on the other hand to detect a possible absence of line synchronisation signal Hsync, a second counting means 12 reinitialised at the end of each received raster and intended to supply, to the deflection unit, the number of lines $l_s$ separating two successive received rasters and a third counting means 14 intended, on the one hand, to deliver synchronisation pulses of a signal $M_t$ generated by the acquisition unit and intended to indicate the centre of the received rasters, and on the other hand, to detect a possible absence of synchronisation signal Vsync.

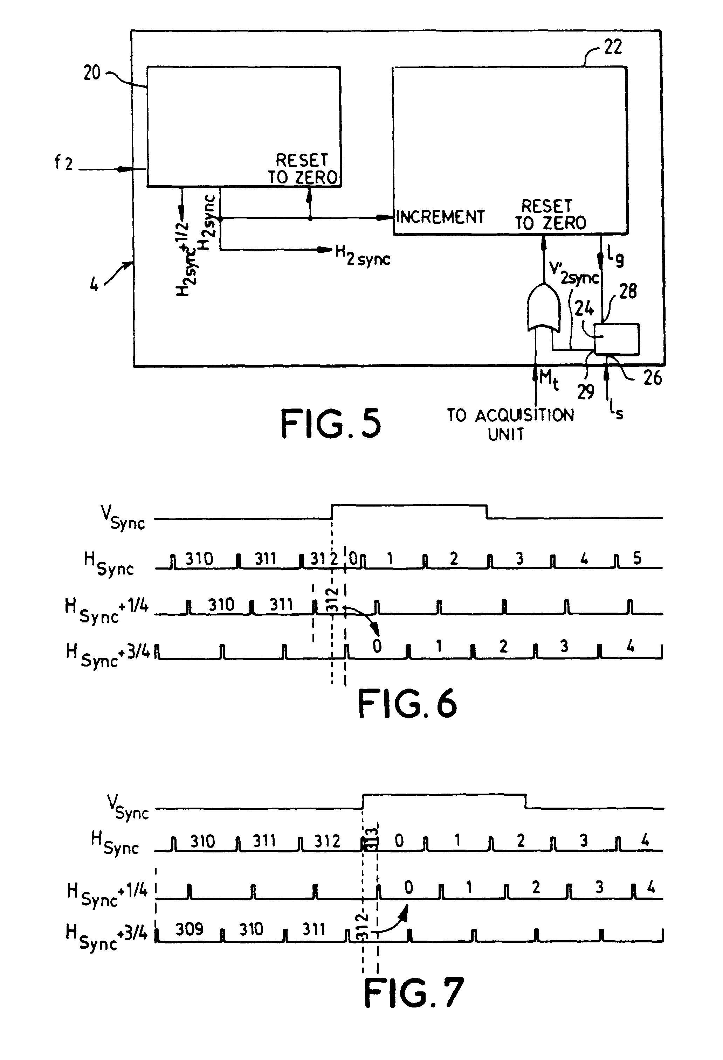

As may be seen in Figure 5, the deflection unit 4 has a fourth means 20 for counting the number of pixels $p_q$ constituting one video line of a generated raster, this counting means 20 being synchronised to the second clock frequency $f_2$ and reinitialised periodically when its contents reach the value of the number $p_r$, a fifth counting means 22 intended to count the number of lines $l_g$ of a generated raster, this fifth counting means being reinitialised either by the signal $M_t$, or by a self-reinitialisation signal $V'_{2sync}$ generated by a pulse generator means 24 receiving at an input 26 the number $l_s$ and at an input 28 the number $l_g$, and delivering at an output 29 the said signal $V'_{2sync}$ when the numbers $l_s$ and $l_g$ are equal.

According to another characteristic of the invention, the first counting means 10 generates signals $H_{sync+1/2}$, $H_{sync+1/4}$ and $H_{sync+3/4}$ originating from a decoding of the spatial position in a line of a received raster, and intended respectively to synchronise decoding of the pixel situated at the line centre, decoding of the first pixel situated in the first quarter line and decoding of the first pixel situated in the last quarter line. Furthermore, the signals $H_{sync + 1/4}$, $H_{sync + 3/4}$ are used to synchronise respectively the counting of the number of lines in an even raster, and the counting of the number of lines in an odd raster, as illustrated in Figures 6 and 7.

During operation, as can be seen in Figure 4, the acquisition unit receives the synchronisation signals $H_{sync}$ and $V_{sync}$ extracted, in a manner known per se, from a composite video signal representing the received image. The signals $H_{sync}$ and $V_{sync}$ are periodic rectangular pulses. The rear edge of the signal $H_{sync}$ determines the time reference of the line period whilst the rear edge of the signal $V_{sync}$ determines the significant instant of raster synchronisation. Each line has a duration of 64 μs and is sampled at a frequency equal to 13.5 MHz into 864 pixels independently of the transmission standard. The pulses $H_{sync}$ initialise the pixel counting means 10. In the event of absence of a pulse $H_{sync}$ this pixel counting means 10 automatically self-initialises when the number of pixels counted $p_r$ reaches the value 864 and delivers a pseudo-synchronisation pulse $H'_{sync}$. This pulse $H'_{sync}$ appears with a delay of one cycle, and performs incrementing of the counting means of 12 and 14. If the lines of the received image have a duration $d_r$ less than 64 μs, the line fly-backs will be close together. In this case, as the counting means 10 is slaved to the line fly-back which coincides with the counting of 864 pixels, it is automatically reinitialised to the same period as the genuine line fly-backs and a pulse $H'_{sync}$ is produced synchronously with these genuine line fly-backs. The result of this is that the line counting means 10 and 14 will be correctly incremented. However, the counting means 10 counts for a duration of 64 μs corresponding to the number of pixels per line. Consequently, in the event of absence of a line synchronisation signal $H_{sync}$ and if the preceding lines have a duration less than 64 μs, the useful signal of the next line will be incorrectly stored since the assumed start of this line is shifted with respect to the line fly-back provided. This remains true for all following lines of the received image for which the pulse $H_{sync}$ is not generated. However, as soon as a pulse $H'_{sync}$ is generated, the counting means 10 is reinitialised, producing a correct repositioning of the received useful signal.

This is because, as can be seen in Figure 4, the received pulses $H_{sync}$ and the pulses $H'_{sync}$ generated by the counting means 10 reaching its limit are applied simultaneously to the input of a logic OR gate having the reference 30. The result of this is that during standard operation (no absence of a pulse $H_{sync}$), one of the pulses $H_{sync}$ and $H'_{sync}$ controls the incrementing of the line counting means 12 and 14. Thus the line counting means 14 is totally slaved to the line fly-back bursts of the received image, and the counting means 12 is slaved to the raster fly-back bursts of the received image. This counting means 12 counts, from zero, the integer number of lines $l_s$ separating two successive rasters, and the value it reaches defines the number of 100 Hz raster lines generated.

It should be noted that, in order to allow interlacing of rasters, the number of lines $l_r$ per received raster is an odd multiple of half-lines. Its maximum value is denoted $INT(l_s)$, where $INT(l_s)$ represents an integer number between $l_s$-1 and $l_s$, $l_s$ being the number of lines separating two successive rasters. Initialisation of the counting means 12 coincides with the first of the pulses $H_{sync+1/4}$ or $H_{sync+3/4}$ which synchronises the raster flyback of the received image. Incrementing of this counting means 12 is obtained either by a pulse $H_{sync+1/4}$, if the received raster is even, or by the pulse $H_{sync+3/4}$, if the received raster is odd, as illustrated schematically, respectively, by Figures 6 and 7. Thus, whatever the parity of the received raster, the counting means 12 always counts the same number of lines. In the case of the 50 Hz standard, where each raster is composed of 312.5 lines, the counting means 12 starts at zero and then counts 312 lines for both an even received raster and an odd received raster. At each raster fly-back $V_{sync}$, the value reached by this counting means 12 is transferred to the deflection unit via a storage register RS, not shown. This value is then used to generate raster fly-back pulses $V_{2sync}$ of the generated image rasters. It should be noted that the value reached by the counting means 12 is transferred to the storage register RS only if it is between the two limit values 234 and 340. This is because, for certain items of video equipment (video recorders for example), the number of lines per raster may vary while remaining between these limit values. If the value reached by the counting means 12 before reinitialisation is too different for two successive rasters, this means there is a temporary dysfunction which is the result of either an absence of raster fly-back pulse $V_{sync}$ if the said value reached is greater than 340 lines, or a change of transmission channel if this value reached is less than 234 lines. In this case, in order to keep some continuity in the size of images generated, the value reached by the counting means 12 is not transferred into the storage register RS. In the contrary case, this value is used to slave the synchronisation of the generated rasters so as to fulfil the relationship $lc_i + lc'_i = 2*LC_i$.

In the case where $LC_i$ is between 234 and 340 lines, and if $LC_i$ is less than or equal to 23+288, the 23rd line being the first useful line, the maximum number of useful lines capable of being stored in the raster storage means (6, 8) is equal to 288 lines. In general, the maximum number of useful lines capable of being stored in the raster storage means (6, 8) is, for the 50 Hz standard, equal to the smaller of the two values 288 and $(Lc_i - 23)$ (respectively $(Lc_i - 17)$ for the 60 Hz standard) represented by $min(288, Lc_i - 23)$ (respectively $min(244, Lc_i - 17)$ for the 60 Hz standard).

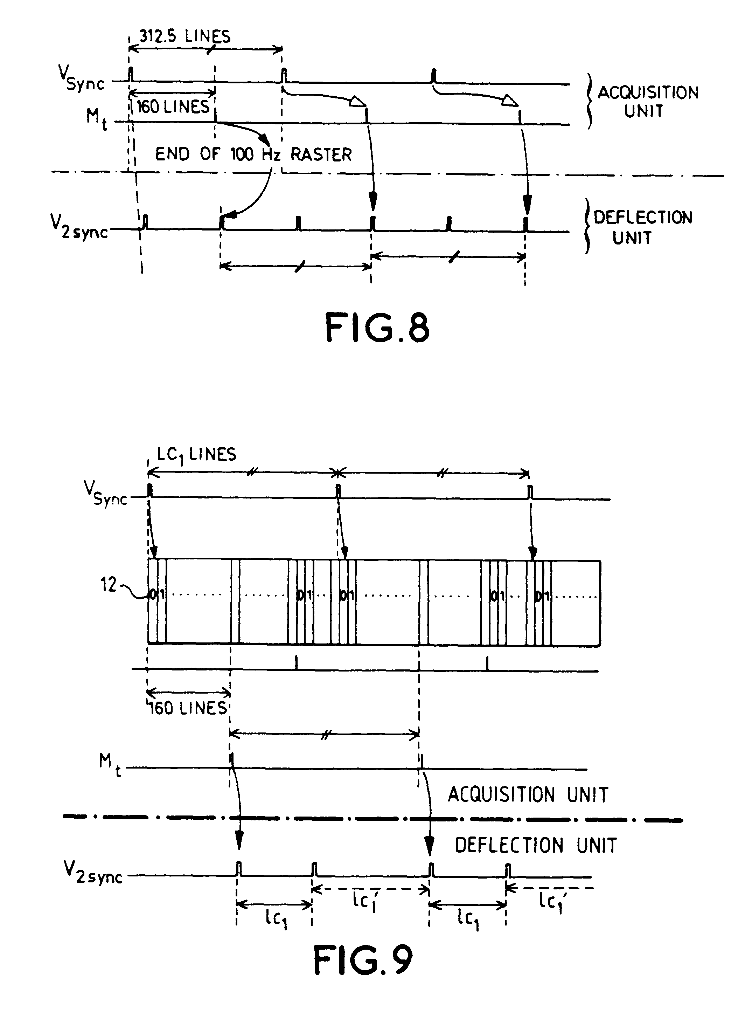

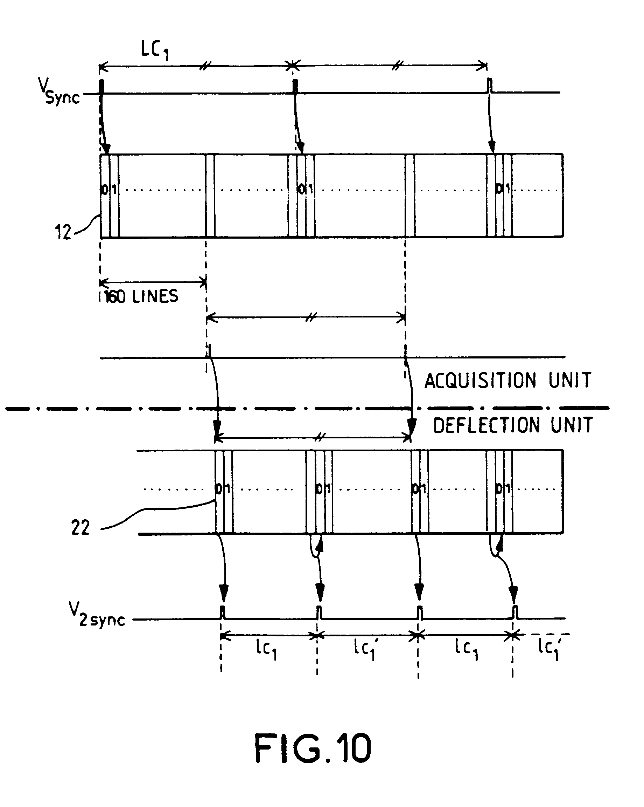

As can be seen in Figures 9 and 10, showing schematically the contents of the counting means 14, it can be seen that the latter is initialised at each rising edge of the signal $V_{sync}$ and, when this counting means 14 reaches the value 160, for the 50 Hz standard, and 134, for the 60 Hz standard, the signal $M_t$ is generated by the acquisition unit. This signal $M_t$ initialises the counting means 22 and consequently synchronises the generation of the signals V2sync as can be seen in Figures 9 and 10. This mechanism makes it possible to impose on the generated rasters a number of lines equal to $I_s$ which is equal to $LC_i$. The useful signal of the rasters will be positioned either at line 17 for the 60 Hz standard or at line 23 for the 50 Hz standard and will clearly be correctly read twice from the raster storage means.

Figure 10 illustrates the case of a received signal according to the 50 Hz standard where $LC_i$ is greater than 340 lines, the counting means 14 loops back as soon as it reaches the last value stored in the storage register RS. This value corresponds to the number $I_s$ which is by definition less than or equal to 340 and which is different from the number of lines in the 50 Hz raster received. However, only the lines numbered from 23 to 310 will be stored and all lines of number greater than or equal to 23 + 288 will be considered as forming part of the raster blanking. On reading back, in view of the instant chosen for starting the first read, all the active lines will be present in the 100 Hz raster generated. This is because the acquisition unit receives a raster having a number of lines $LC_i$ greater than the number of lines $I_s$. However, at the end of $(LC_i - I_s)$ lines, a genuine raster fly-back $V_{sync}$ is received by the said acquisition unit. This amounts to considering that the raster blanking signal was longer than normal in the preceding raster. All lines of number between 0 and $(LC_i - I_s)$ just after reinitialisation of the counting means 14 through it reaching its limit, that is to say when the value reached by this counting means 14 is equal to $I_s$, are considered to be raster fly-back lines. The result of this is that the successive 100 Hz rasters generated will have respectively for $I_s$ lines of 32 μs and $(2* LC_i)$ - Is lines. Only these two rasters will be generated. The two successive 100 Hz rasters will clearly have the same number of useful lines and, in each raster, the useful signal will actually be that of the 50 Hz raster received. The synthesized image therefore corresponds to the received image without any perturbation.

## Claims

1. Method of generating images having a raster frequency $F_2$ from source images having a raster frequency $F_1$ different from F2, characterised in that, from the source image rasters, the useful lines representing luminance information and chrominance information are extracted, as well as the synchronisation signals $H_{sync}$ and $V_{sync}$ respectively of the lines and rasters of the said source images, the information extracted at a frequency $f_1$ is stored, the number of lines constituting each raster is counted, the number of pixels constituting these lines is counted, this pixel number is stored, on the one hand, the signals $H_{sync}$ and $V_{sync}$ and, on the other hand, the number of lines constituting each received raster and the number of pixels constituting these lines, are used to generate line synchronisation signals $H_{2sync}$ having a frequency $f_2$ different from $f_1$, and raster synchronisation signals $V_{2sync}$ having the frequency $F_2$.

2. Method according to Claim 1, characterised in that for a received raster, having a number of lines $LC_i$, two rasters are generated having respectively a number of lines $lc_i$ and a number of lines $lc'_i$ fulfilling the following conditions:

$$lc_i + lc'_i = 2*LC_i$$

and

$$lc_i = lc'_i = LC_i.$$

3. Method according to Claim 2, characterised in that the frequency $f_2$ has a value double the frequency $f_1$.

4. Method according to Claim 1, characterised in that the source images are television images having a raster frequency $F_1$ equal to 50 Hz, and in that the generated images have a raster frequency $F_2$ equal to 100 Hz.

5. Device for generating images having a raster frequency $F_2$ from source images having a raster frequency $F_1$ different from $F_2$, comprising an acquisition unit (2) intended to receive line synchronisation signals $H_{sync}$ and raster synchronisation signals $V_{sync}$ of the source images, a deflection unit (4) intended to supply line synchronisation signals $H_{2sync}$ and raster synchronisation signals $V_{2sync}$ of the generated images, and at least one means (6,8) for storing the useful lines representing the luminance and chrominance of the source images, characterised in that the acquisition unit comprises means for slaving the synchronisation of the rasters constituting the images to be generated to the number of useful lines in the rasters constituting the source images.

6. Device according to Claim 5, characterised in that these synchronisation slaving means are constituted by a first counting means (10), synchronised to the first clock frequency $f_1$, and intended on the one hand to count the number of pixels constituting one line of a received raster and on the other hand to detect a possible absence of line synchronisation signal Hsync, a second counting means (12) reinitialised at the end of each received raster and intended to supply, to the deflection unit, the number of lines $l_s$ separating two successive received rasters and a third counting means (14) intended, on the one hand, to deliver synchronisation pulses of a signal $M_t$ generated by the acquisition unit and intended to indicate the centre of the received rasters, and on the other hand, to detect a possible absence of synchronisation signal Vsync.

7. Device according to Claim 6, characterised in that the deflection unit (4) comprises a fourth means (20) for counting the number of pixels $p_g$ constituting one video line of a generated raster, this counting means (20) being synchronised to the second clock frequency f2 and reinitialised periodically when its contents reach the value of the number $p_r$, a fifth counting means (22) intended to count the number of lines $l_g$ of a generated raster, this fifth counting means being reinitialised either by the signal $M_t$, or by a self-reinitialisation signal $V'_{2sync}$ generated by a pulse generator means (24) receiving at an input (26) the number $l_s$ and at an input (28) the number $l_g$, and delivering at an output (29) the said signal $V'_{2sync}$ when the numbers $l_s$ and $l_g$ are equal.

8. Device according to Claim 7, characterised in that the first counting means (10) generates signals $H_{sync+1/2}$, $H_{sync+1/4}$ and $H_{sync+3/4}$ originating from a decoding of the spatial position in a line of a received raster, and intended respectively to synchronise decoding of the pixel situated at the line centre, decoding of the first pixel situated in the first quarter line and decoding of the first pixel situated in the last quarter line.

9. Device according to Claim 7, characterised in that the signals $H_{sync + 1/4}$, $H_{sync + 3/4}$ are used to synchronise respectively the counting of the number of lines in an even raster, and the counting of the number of lines in an odd raster.

50 Hz STANDARD

288 ACTIVE LINES

RASTER SYNCHRONISATION

312.5 LINES

22 LINES

2.5 LINES

## FIG.1a

60 Hz STANDARD

244 ACTIVE LINES  +16 LINES

RASTER SYNCHRONISATION

262.5 LINES

2.5 LINES

## FIG.1b

START OF WRITING
THE USEFUL SIGNAL

22 LINES

USEFUL SIGNAL 1

USEFUL SIGNAL 2

CENTRE OF RASTER

USEFUL SIGNAL 1

USEFUL SIGNAL 1

USEFUL SIGNAL 2

USEFUL SIGNAL 2

START OF FIRST READ

START OF SECOND READ

22 LINES

## FIG.2

FIG.3

FIG.4

8

EP 0 814 608 A1

FIG.5

FIG.6

FIG.7

9

312.5 LINES

$V_{Sync}$

$M_t$

160 LINES

END OF 100 Hz RASTER

$V_{2sync}$

ACQUISITION UNIT

DEFLECTION UNIT

# FIG.8

$LC_1$ LINES

$V_{Sync}$

12

D1 · · · · · · · · · · · D1 · D1 · · · · · · · · · · · · D1 · · · D1

160 LINES

$M_t$

ACQUISITION UNIT

DEFLECTION UNIT

$V_{2sync}$

$lc_1$    $lc_1'$    $lc_1$    $lc_1'$

# FIG.9

EP 0 814 608 A1

FIG.10

11

European Patent
Office

**EUROPEAN SEARCH REPORT**

Application Number

EP 97 40 1381

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | EP 0 287 169 A (N.V. PHILIPS GLOEILAMPENFABRIEKEN) * the whole document * --- | 1,5 | H04N5/44 |
| A | EP 0 242 123 A (RCA CORPORATION) * column 13, line 7 - column 16, line 2 * --- | 1,5 | |
| A | EP 0 287 168 A (N.V. PHILIPS GLOEILAMPENFABRIEKEN) * the whole document * --- | 1,5 | |
| A | EP 0 109 099 A (N.V. PHILIPS GLOEILAMPENFABRIEKEN) * the whole document * --- | 1,5 | |
| A | GB 2 218 877 A (RCA LICENSING CORPORATION) * the whole document * --- | 1,5 | |
| A | EP 0 487 072 A (MATSUSHITA ELECTRIC INDUSTRIAL CO. LTD.) * the whole document * ----- | 1,5 | TECHNICAL FIELDS SEARCHED (Int.Cl.6) H04N |

The present search report has been drawn up for all claims

| Place of search | Date of completion of the search | Examiner |
|---|---|---|
| THE HAGUE | 26 August 1997 | Verschelden, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)